# NEUE EUROPÄISCHE PATENTSCHRIFT

(11) **EP 0 949 130 B2**
(45) Veröffentlichungstag und Bekanntmachung des Hinweises auf die Entscheidung über den Einspruch: **19.01.2011**
(45) Hinweis auf die Patenterteilung: 22.09.2004
(21) Anmeldenummer: 99102057.9
(22) Anmeldetag: 02.02.1999
(51) Int. Cl.: B60T 7/04, B60T 13/66, B60T 13/68

(54) **Steuereinrichtung für eine Fahrzeug-Bremsanlage**
Control device for a vehicle brake system
Dispositif de commande d'un système de freinage de véhicule

(30) Priorität: 07.04.1998 DE 19815440
(43) Veröffentlichungstag der Anmeldung: 13.10.1999
(73) Patentinhaber: WABCO GmbH, 30453 Hannover (DE)
(72) Erfinder: Rosendahl, Hartmut, 30167 Hannover (DE); Gröger, Jens, 30449 Hannover (DE); Wiehen, Christian, Dr., 64646 Heppenheim (DE); Klein, Bode, 30890 Barsinghausen (DE); Neuhaus, Detlev, 30519 Hannover (DE); Klik, Stefan, 30173 Hannover (DE); Lichtenberg, Wolfgang, 30457 Hannover (DE); Stehr, Wolfgang, 30171 Hannover (DE); Schult, Manfred, Dr., 30826 Garbsen (DE); Stumberg, Ingo, 30880 Laatzen (DE)
(74) Vertreter: Lauerwald, Jörg

(56) Entgegenhaltungen:
- EP-A- 0 399 162
- EP-A- 1 000 830
- EP-A2- 0 829 403
- EP-B1- 0 105 219
- DE-A- 19 504 411
- DE-A- 19 510 525
- DE-A1- 4 029 334
- US-A- 4 633 757
- US-A- 4 818 036

## Beschreibung

Die Erfindung betrifft eine Steuereinrichtung für eine pneumatische Fahrzeug-Bremsanlage nach dem Oberbegriff des Patentanspruchs 1.

Eine derartige Steuereinrichtung ist aus Fig. 2 der DE 32 30 970 A1 bekannt. Der Bremswertgeber gibt dort ein elektrisches Bremswertsignal ab, ist folglich elektrisch einkreisig. Die Steuerelektronik wird dort von mehreren Blöcken gebildet, die als "elektronisches Steuergerät", "lastabhängiges Schaltglied" und "elektronisches Schaltglied einer Blockierschutzeinrichtung" bezeichnet werden. Die Steuereinrichtung dient zur Steuerung des Einsatzes und der Bremswirkung von Bremsen, die auf die Achsen des zu bremsenden Fahrzeugs verteilt sind. An ihren Ausgängen, die von den Ausgängen des zuletzt genannten Schaltgliedes gebildet werden, gibt die Steuerelektronik für jede Achse ein eigenes Bremsbetätigungssignal aus. Die Werte der Bremsbetätigungssignale berechnet die Steuerelektronik nach dem Wert des von dem Bremswertgeber an sie abgegebenen Bremswertsignals sowie nach Signalen von Lastund Raddrehzahlsensoren. Die Bremsbetätigungssignale sind in diesem Fall also nicht nur von dem Bremswertsignal abhängig. Es ist aber auch bekannt, daß ein Bremsbetätigungssignal oder alle Bremsbetätigungssignale nur nach dem Bremswertsignal berechnet werden.

Die Bremsbetätigungssignale werden elektrisch gesteuerten Energieverteilern zugeführt, die nach Maßgabe der Bremsbetätigungssignale Zuspannenergie erzeugen und an die Bremsen liefern oder aus Energievorräten Zuspannenergien zu den Bremsen liefern. Diese erzeugen Bremskräfte, deren Werte von den zugeführten Zuspannenergien abhängen.

Der Begriff "Zuspannenergie" ist vorliegend nicht streng physikalisch zu verstehen, sondern als Sammelbegriff für alle physikalischen Größen, bei deren Zuführung eine Bremse eine Bremskraft erzeugt. In der bereits erwähnten Schrift ist der Druck komprimierter Luft als Zuspannenergie vorgesehen.

Aus der EP 0 467 112 A2 ist eine Steuereinrichtung der eingangs genannten Art mit einem elektrisch zweikreisigen Bremswertgeber bekannt, in der die Steuerelektronik auf einen oder mehrere Zentralmodule und Radmodule aufgeteilt ist.

In der nicht vorveröffentlichten deutschen Patentanmeldung 197 55 431.8 ist vorgesehen, die einer Achse zugeordneten Radmodule zu einem Achsmodul zusammenzufassen.

Aus der EP 0 399 162 B1 ist es bekannt, die komplette Steuerelektronik zusammenzufassen.

Aus der US-PS 4,818,036 ist ein elektrischer Bremswertgeber bekannt, welcher ein elektrisches Ausgangssignal zur Ansteuerung eines elektronischen Bremssystems (EBS) ausgibt. Zur Anpassung seiner Ausgangskennlinie in eine Kennlinie mit progressiver Charakteristik ist an den Bremswertgeber eine Elektronik angebaut, welche das Ausgangssignal eines Kraft- oder Weg-Sensors in ein Signal mit einer derartigen progressiven Charakteristik umformt. Die mit dem bekannten Bremswertgeber verbundene EBS-Elektronik ist nicht in der Nähe des Bremswertgebers, sondern an anderer, geeigneter Stelle des Fahrzeugs angeordnet.

Aus der DE 195 04 411 A1 ist ein Verfahren und eine Vorrichtung zur Anzeige eines Bremsvorganges bzw. einer Bremspedalbetätigung bekannt. Diese enthält einen elektrischen Bremswertgeber mit zwei Wegsensoren zur Abtastung der Bremspedal-Stellung. Weiter enthält der Bremswertgeber pneumatische bzw. hydraulische Teile, die an entsprechende Bremskreise angeschlossen sind. Der Bremswertgeber ist über zwei Anschlußleitungen mit einer EBS-Elektronik verbunden. Die eigentliche elektronische Steuereinheit (26) (EBS) ist nicht in der Nähe des Bremspedals angeordnet.

Die DE 195 10 525 A1 zeigt ein Verfahren und eine Vorrichtung zur Steuerung bzw. Regelung der Bremsanlage eines Fahrzeugs, welche ebenfalls ein Bremspedal mit einem elektrischen Signalausgang zur Ansteuerung eines EBS aufweist. Dabei sind die mit dem Bremspedal verbundenen Sensoren zusammen mit einer Meßwertverarbeitungsinheit am Bremspedal integriert. Die Ausgangssignale der Pedalerfassungseinheit werden über Verbindungsleitungen der eigentlichen EBS-Elektronik zugeführt. Eine Integration der EBS-Elektronik mit der Pedalerfassungseinheit ist nicht offenbart.

Schließlich ist aus der US-PS 4,633,757 ein Bremskraftverstärker bekannt, der verschiedene Druck- sowie Kraftsensoren enthält. Diese sind über Verbindungsleitungen mit einer elektronischen Regeleinheit verbunden. Die Regeleinheit ist außerhalb des Bremskraftverstärkers angeordnet.

In der Fahrzeugindustrie ist es üblich, die Komponenten der Bremsanlage, wie auch die Komponenten anderer Fahrzeugsysteme, speziell auf die Einsatz- und/oder Betriebsbedingungen der einzelnen Fahrzeugtypen bzw. Fahrzeugbaureihen auszulegen und/oder abzustimmen mit dem Ziel, das Einsatzverhalten der Fahrzeuge zu opti-mieren. Deshalb ist es in der Regel erforderlich, zahlreiche Varianten sowohl des Bremswertgebers als auch der Steuerelektronik der eingangs genannten Steuereinrichtung zu produzieren und vorzuhalten. Dies verursacht erhebliche Lagerhaltungskosten.

Der Erfindung liegt die Aufgabe zugrunde, mit einfachen Mitteln die Lagerhaltungskosten zu senken.

Diese Aufgabe wird durch die in dem Patentanspruch 1 angegebene Erfindung gelöst.

Die Produktion und die Vorhaltung der nach dem Stand der Technik erforderlichen zahlreichen Varianten verursachen auch einen erheblichen Lagerplatzbedarf. Die Erfindung ermöglicht auch eine Verringerung dieses Aufwands.

Die aus dem Stand der Technik bekannte Trennung von Bremswertgeber und Steuerelektronik bedingt sowohl am Bremswertgeber als auch an der Steuerelektronik nach außen geführte elektrische Anschlüsse, beispielsweise Anschlußstecker mit Anschlußkupplungen, für die elektrische(n) Verbindung(en) zwischen dem Bremswertgeber und der Steuerelektronik. Die Erfindung ermöglicht, die Zahl dieser Anschlüsse zu verringern, beispielsweise zu halbieren. Auch dies führt zu einer Kostensenkung. Die vorstehend erwähnte Trennung von Bremswertgeber und Steuerelektronik verursacht im Fahrzeug einen erheblichen Einbauraumbedarf. Auch insofern ist die Erfindung vorteilhaft.

Äußere Anschlüsse können Störquellen sein, beispielsweise wenn sie nach unsachgemäß und/oder widrigen Bedingungen durchgeführten Reparaturarbeiten den Zutritt von Feuchtigkeit und/oder Verschmutzungen ermöglichen. Die Erfindung verringert dieses Risiko.

Über die äußere(n) elektrische(n) Verbindung(en) zwischen dem Bremswertgeber und der Steuerelektronik kann, insbesondere nach unsachgemäßen Reparaturarbeiten, elektromagnetische Störstrahlung in die Steuereinrichtung eingeleitet werden. Die Erfindung beseitigt dieses Risiko.

In vielen Fällen enthält der Bremswertgeber eine Signalaufbereitungselektronik, ggfs. mit Schutzschaltung, für die von seinem aktiven Element erzeugten Signale. Als aktives Element kommen beispielsweise ein induktiver oder magneto-resistiver Wegsensor in Betracht. Die Erfindung ermöglicht eine Vereinfachung und Zusammenfassung der Signalaufbereitungselektronik mit Innenteilen der Steuerelektronik und auf diese Weise eine weitere Kostensenkung. Beispielsweise kann eine im Stand der Technik vorhandene eigene Leiterplatte der Signalaufbereitungselektronik in eine Leiterplatte der Steuerelektronik intgriert und somit eingespart werden.

Derjenige Teil der Steuerelektronik, der erfindungsgemäß in dem mit dem Bremswertgeber zusammengefaßten Elektronikblock enthalten ist, ist beim Stand der Technik in vielen Fällen an anderer Stelle im Fahrerhaus untergebracht als der Bremswertgeber. Die elektrischen Verbindungen rufen häufig Verlegungsprobleme und/oder zusätzlichen Aufwand hervor und können auch die Betriebssicherheit nachteilig beeinflussen. Die Erfindung ist auch in dieser Hinsicht vorteilhaft.

Bei einer Anbringung der erfindungsgemäßen Baueinheit an der Fahrerhausspritzwand kann sie durch Verwendung von Anschlußsteckern nach innen und außen als Übertragungsstelle von Signalen in das Fahrerhaus und zum Fahrgestell dienen. Hierbei können auch Daten von anderen Systemen (z.B. eines Fahrpedalsensors) übertragen werden.

Der Bremswertgeber weist auch einen ein- oder mehrkreisigen Druckteil auf, an dem er pro Druckkreis aus einem bzw. mehreren Druckvorräten einen bzw. mehrere Drücke, der bzw. die von der Betätigungskraft und/oder dem Betätigungsweg abhängig sind, liefert. Dieser Druck bzw. diese Drücke dienen zur Notbetätigung der Bremsen im Falle eines Defekts in der Steuereinrichtung bzw. in elektrischen Teilen der von dieser gesteuerten Komponenten, beispielsweise der Energieverteiler. Zur Rückhaltung dieses Drucks bzw. dieser Drücke bei Intaktheit der elektrischen Anlageteile dient ein Sperrventil pro Druckkreis, wie es beispielsweise in Fig. 2 der DE 32 30 970 A1 und der EP 0 399 162 B1, die beide schon erwähnt wurden, darstellt bzw. beschrieben ist. Ein solches Sperrventil bzw. mehrere oder alle Sperrventile sind zwecks weiterer Kostensenkung in die erfindungsgemäße Baueinheit integriert.

Die Erfindung wird nunmehr anhand eines Ausführungsbeispiels erläutert. Unter durchgehender Verwendung gleicher Bezugszeichen für funktionsgleiche Bauelemente zeigen
- Fig. 1: schematisch eine Baueinheit, die nicht beausprucht ist, und
- Fig. 2: schematisch eine erfindungsgemäße Fortbildung der Baueinheit nach Fig. 1.

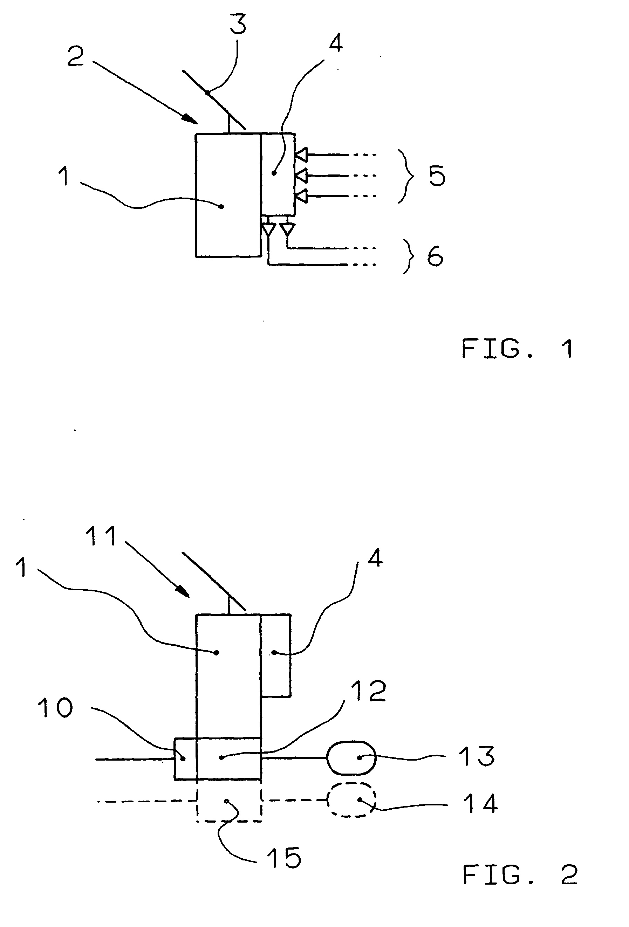

In der in Fig. 1 schematisch dargestellten Baueinheit (2) sind ein Bremswertgeber (1) und ein Elektronikblock (4) zusammengefaßt. Der Elektronikblock (4) enthält die vollständige Steuerelektronik, welche mit dem Bremswertgeber (1) eine Steuereinrichtung für eine Fahrzeug-Bremsanlage bildet.

Der Bremswertgeber (1) kann elektrisch einkreisig oder, zur Erhöhung der Sicherheit, mehrkreisig sein. Er ist über ein als Pedal ausgebildete Bedienungsorgan (3) von dem Fahrzeugführer betätigbar. Je nach Anzahl seiner Kreise gibt der Bremswertgeber (1) bei Betätigung über interne elektrische Verbindungen ein Bremswertsignal oder ein Bremswertsignal pro Kreis an den Elektronikblock (4) ab. Im folgenden wird der Übersichtlichkeit halber ein einkreisiger Bremswertgeber unterstellt. Ein solcher Bremswertgeber ist aus der US 4 818 036 bekannt. Das, was im folgenden für das eine von dem Bremswertgeber (1) abgegebene Bremswertsignal gesagt wird, gilt im Falle eines mehrkreisigen Bremswertgebers für die anderen Bremswertsignale entsprechend mit. Der Wert des von dem Bremswertgeber (1) abgegebenen Bremswertsignals hängt von der Betätigungskraft des Fahrzeugführers auf das Betätigungsorgan (3) und/oder dem Betätigungsweg ab.

Die in dem Elektronikblock (4) enthaltene Steuerelektronik berechnet aus dem Bremswertsignal ein Ausgangssignal und gibt dieses, wie durch abgehende Pfeile (6) angedeutet ist, aus. Das Ausgangssignal ist zugleich ein Bremsbetätigungssignal, welches über einen oder mehrere Energieverteiler die Bremskrafterzeugung einer oder mehrerer Bremsen steuert. Die in dem Elektronikblock (4) enthaltene Steuerelektronik kann, je nach den Erfordernissen des zu bremsenden Fahrzeugs und/oder der Bremsen, so fortgebildet werden, daß sie mehrere Ausgangssignale bzw. Bremsbetätigungssignale ausgibt.

Die in dem Elektronikblock (4) enthaltene Steuerelektronik kann auch so fortgebildet werden, daß sie in die Berechnung der Ausgangssignale bzw. Bremsbetätigungssignale weitere Signale einbezieht, die dem Elektronikblock (4), wie durch eintretende Pfeile (5) angedeutet ist, zugeführt werden. Diese Signale können von Sensoren aber auch von anderen elektronischen Fahrzeugsystemen stammen, die dazu ihrerseits je nach Ausgestaltung Sensorsignale erhalten können. Als solche weiteren Signale sind beispielsweise Last-, Drehzahl-, Verzögerungs-, Temperatur-, Zuspannenergie-, Verschleißsignale üblich.

In Fig. 2 ist die mit (11) bezeichnete Baueinheit gegenüber der bisher beschriebenen Baueinheit (2) dadurch fortgebildet, daß der mit (1, 12) zu bezeichnende Bremswertgeber um einen Druckkreis (12) erweitert ist. Dieser Druckkreis (12) liefert bei Betätigung des Bremswertgebers aus einem Druckvorrat (13) einen Druck an die Bremsen. Der Wert dieses Drucks hängt, wie das elektrische Bremswertsignal von der Betätigungskraft des Fahrzeugführers auf das Betätigungsorgan (3) und/oder dem Betätigungsweg ab. Dieser Druck dient der Notbetätigung der Bremsen im Falle eines Defekts in der Steuereinrichtung bzw. in elektrischen Teilen der von dieser gesteuerten Komponenten, beispielsweise der Energieverteiler. Ein solcher Bremswertgeber mit integriertem Druckkreis ist aus der EP 0 373 315 A1, bekannt.

Es ist üblich, den von dem Druckkreis gelieferten Druck bei Intaktheit der Steuerelektronik und der weiteren elektrischen Teile der Bremsanlage mittels eines Sperrventils zurückzuhalten. Es ist bekannt, das Sperrventil durch die Steuerelektronik oder durch den von der Steuerelektronik gesteuerten Druck betätigen zu lassen. Ein durch den zuletzt genannten Druck betätigtes Sperrventil ist aus der bereits erwähnten EP 0 399 162 B1 bekannt.

Die Baueinheit (11) ist durch die Integration eines mit dem Bezugszeichen (10) symbolisierten Sperrventils fortgebildet.

Die Fig. 2 zeigt gestrichelt eine weitere Fortbildung, in der der Bremswertgeber (1, 12) um einen zweiten Druckkreis (15) erweitert ist, der bei Betätigung des Bremswertgebers aus einem weiteren Druckvorrat (14) Druck an ihm zugeordnete Bremsen liefert.

Diese Fortbildung erhöht das Sicherheitspotential des zu bremsenden Fahrzeugs, indem sie sogar, wenn zusätzlich zu einem elektrischen Defekt noch ein Druckkreis ausfällt, noch eine Notbremsung sicherstellt. Ein so fortgebildeter Bremswertgeber kann beispielsweise durch Hinzufügung eines zweiten Druckkreises nach dem Beispiel der WABCO Westinghouse-Druckschrift "Motorwagen-Bremsventil 461315", Ausgabe 09.79, an den Bremswertgeber gemäß der EP 0 399 162 B1 hergestellt werden. Es liegt auf der Hand, daß auch der zweiten Druckkreis mit einem Sperrventil versehen werden kann und daß dieses in nicht dargestellter Weise ebenfalls in die Baueinheit (11) integriert werden kann.

Der Fachmann erkennt schließlich, daß das Ausführungsbeispiel und die beschriebenen Fortbildungen den Schutzbereich der Erfindung nicht erschöpfend beschreiben und daß dieser vielmehr alle Ausgestaltungen umfaßt, deren Merkmale sich den Patentansprüchen unterordnen.

## Patentansprüche

1. Steuereinrichtung für eine pneumatische Bremsanlage für Strassenfahrzeuge mit einem von dem Fahrzeugführer betätigbaren wenigstens einkreisigen Bremswertgeber (1; 1, 12) und einer Steuerelektronik,
worin der Bremswertgeber (1; 1, 12) pro Kreis ein von der zugeführten Betätigungskraft und/oder dem Betätigungsweg abhängiges elektrisches Bremswertsignal an die Steuerelektronik abgibt und die Steuerelektronik im ungestörten Normalbetrieb wenigstens ein von wenigstens von einem Bremswertsignal abhängiges elektrisches Bremsbetätigungssignal zur Ansteuerung von Energieverteilern zur Bremsbetätigung ausgibt,
**dadurch gekennzeichnet,**
**dass** der Bremswertgeber (1; 1, 12) und ein Elektronikblock (4) zu einer Baueinheit (2; 11) zusammengefasst sind, wobei der Elektronikblock (4) die vollständige Steuerelektronik enthält, wobei.
der Bremswertgeber (1, 12) auch einen wenigstens einkreisigen Druckteil (12) aufweist, mit dem er im Notbetrieb pro Druckkreis einen von der zugeführten Betätigungskraft und/oder dem Betätigungsweg abhängigen Druck liefern kann und in die Baueinheit (11) für wenigstens einen der Druckkreise auch ein Sperrventil (10) zur Rückhaltung des Druckes im ungestörten Normalbetrieb integriert ist.

## Claims

1. Control device for a pneumatic braking system for road vehicles, having an at least single-circuit braking value generator (1; 1, 12) operable by the driver of the vehicle and an electronic control means,
wherein for each circuit the braking value generator (1; 1, 12) sends to the electronic control means an electrical braking value signal that is dependent upon the supplied operating force and/or the actuator travel, and in undisturbed normal operation the electronic control means outputs at least one electrical braking operation signal, which is dependent upon at least one braking value signal, for actuating energy distributors for brake operation,
**characterized in that**
the braking value generator (1; 1, 12) and an electronics block (4) are combined to form an assembly (2; 11), the electronics block (4) containing the entire electronic control means,
the braking value generator (1, 12) also having an at least single-circuit pressure component (12), with which, in emergency operation, it is able to supply for each pressure circuit a pressure that is dependent upon the supplied operating force and/or the actuator travel, and there also being integrated into the assembly (11) for at least one of the pressure circuits a blocking valve (10) for retaining the pressure in undisturbed normal operation.

## Revendications

1. Dispositif de commande pour une installation de freinage pneumatique de véhicule comprenant un générateur de valeur de freinage (1; 1, 12) à au moins un circuit et pouvant être actionné par le conducteur du véhicule, ainsi qu'une électronique de commande,
dans lequel le générateur de valeur de freinage (1; 1, 12) délivrant, par circuit, à l'électronique de commande, un signal de valeur de freinage électrique, qui est fonction de la force d'actionnement amenée et/ou du déplacement d'actionnement, et l'électronique de commande, en mode de fonctionnement normal non perturbé, délivrant au moins un signal électrique d'actionnement de frein, qui est fonction d'au moins un signal de valeur de freinage et destiné à la commande de répartiteurs ou de distributeurs d'énergie pour l'actionnement des freins,
**caractérisé en ce que**
le générateur de valeur de freinage (1; 1, 12) et un bloc électronique (4) sont regroupés en un module de construction (2; 11), le bloc électronique (4) renfermant la totalité de l'électronique de commande,
le générateur de valeur de freinage (1, 12) présentant également une partie pression (12) à au moins un circuit, avec laquelle il est en mesure, dans un mode de fonctionnement d'urgence, de fournir, par circuit, une pression qui est fonction de la force d'actionnement amenée et/ou du déplacement d'actionnement et
dans le module de construction (11), pour au moins l'un des circuits de pression, étant également intégrée une soupape d'arrêt (10) pour la rétention de la pression dans le mode de fonctionnement normal non perturbé.
